# FASCICULE DE BREVET EUROPEEN

(11) **EP 0 799 722 B1**
(45) Date de publication et mention de la délivrance du brevet: **31.10.2001**
(21) Numéro de dépôt: 97104770.9
(22) Date de dépôt: 20.03.1997
(51) Int. Cl.: B60B 23/00, B60B 5/02, B60B 5/00

(54) **Roue pour véhicules automobiles et procédé de fabrication d'une telle roue**
Rad für Motorfahrzeuge und Verfahren zu dessen Herstellung
Wheel for motor vehicles and its manufacturing process

(30) Priorité: 02.04.1996 FR 9604298
(43) Date de publication de la demande: 08.10.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Tatraux-Paro, Jean-Michel, 63000 Clermont-Ferrand (FR); Vaxelaire, Alain, 63540 Romagnat (FR)
(74) Mandataire: Dequire, Philippe Jean-Marie Denis

(56) Documents cités:
- WO-A-93/01946
- AU-B- 524 458
- GB-A- 1 491 058
- US-A- 4 532 097
- PATENT ABSTRACTS OF JAPAN vol. 015, no. 457 (M-1181), 20 Novembre 1991 & JP 03 193501 A (CHUO SEIKI KK), 23 Août 1991,
- PATENT ABSTRACTS OF JAPAN vol. 009, no. 060 (M-364), 16 Mars 1985 & JP 59 195401 A (MITSUBISHI DENKI KK), 6 Novembre 1984,

## Description

L'invention concerne une roue pour véhicules automobiles et un procédé de fabrication d'une telle roue.

Les roues pour véhicules automobiles sont généralement constituées par deux pièces en acier, la jante et le disque, réalisées par compression ou formage de profilés puis assemblées par soudage. L'emploi de l'acier permet l'obtention de très bonnes performances mécaniques et thermiques mais avec des roues lourdes. Or dans le cadre de l'accent mis actuellement sur les économies d'énergie, une grande préoccupation des constructeurs automobiles est de réduire la masse des éléments de l'automobile tels que les roues dans le but de diminuer la consommation d'essence et d'améliorer la maniabilité des véhicules.

Une solution consiste à réaliser des roues en alliages légers, cependant leur prix de revient est de trois à cinq fois plus élevé que celui des roues en acier. L'utilisation de matériau plastique en est une autre qui permet de réaliser un gain de masse important, mais il est difficile d'obtenir des caractéristiques mécaniques suffisantes dans les roues obtenues et, de plus, se posent des problèmes d'évacuation de l'énergie thermique transmise par les disques de freins.

C'est pourquoi se développent d'autres solutions telles que les roues dites "hybrides" qui comprennent un disque métallique assurant à la fois les caractéristiques de résistance et de conduction thermique et une jante en matière plastique permettant un gain de poids.

Ainsi la publication WO 93/01946 décrit une roue selon le préambule de la revendication 1 qui comprend un disque essentiellement métallique et une jante en matière plastique, fabriqués séparément puis assemblés par vissage. Cependant l'assemblage par vissage nécessite un coût d'industrialisation élevé et une très grande précision pour obtenir une bonne coaxialité entre le disque et la jante.

De plus, la présence d'éléments de support de vis en certains points de la roue crée des zones fragiles présentant plus de risques de rupture. Enfin le vissage sur un matériau plastique provoque un fluage du matériau dans la zone de vissage, d'où une évolution au cours du temps du serrage réalisé initialement, et par conséquent une liaison jante-disque qui n'est pas fiable. Or cette liaison est très sollicitée sous l'effet de la pression de gonflage du pneumatique et des contraintes extérieures s'exerçant au cours du roulage.

La publication JP-A-03193501 révèle une réalisation différente de roue hybride constituée par un disque métallique en alliage léger et par une jante comprenant une première partie intérieure en alliage léger au contact du disque et une seconde partie extérieure plastique liée à la première partie de la jante. Cette réalisation consiste en une solidarisation du disque métallique et de la première partie métallique de la jante par moulage ou forgeage, puis en une finition de ladite première partie par des procédés mécaniques afin d'y creuser une rainure circonférentielle et des trous qui forment ensemble une saillie sur la circonférence de cette première partie de la jante, enfin en un moulage de la deuxième partie de la jante sur la première partie de sorte que la deuxième partie plastique soit en appui sur l'extrémité de la surface extérieure de la première partie et recouvre les saillies. La liaison entre les deux parties de la jante, réalisée par l'appui de la deuxième partie sur la première, est ainsi renforcée par une solidarisation en rotation réalisée grâce à la présence des saillies recouvertes.

Cette roue possède donc une structure particulièrement complexe, ce qui implique une complexité de fabrication et donc également un coût plus important.

L'invention a pour objet une roue hybride simple possédant une liaison entre la jante et le disque améliorée.

Selon l'invention, la roue comprend une jante en matériau composite et un disque métallique assemblés par un bord périphérique d'assemblage porté par le disque et inséré dans la jante.

Préférentiellement, la jante est constituée par un matériau thermoplastique et est surmoulée sur le bord d'assemblage.

Avantageusement, le bord d'assemblage est percé de trous de renforcement de l'assemblage, répartis régulièrement sur sa circonférence, à l'intérieur desquels sont insérés des plots de liaison portés par la jante.

L'invention permet l'obtention d'une roue présentant une bonne coaxialité entre la jante et le disque.

L'invention concerne également un procédé de fabrication d'une roue comprenant une jante en matériau composite et un disque métallique, qui consiste à fabriquer dans une première étape le disque métallique, à positionner un bord périphérique d'assemblage du disque dans un moule et dans une troisième étape à surmouler la jante sur ledit bord d'assemblage.

Un tel procédé de fabrication est à la fois avantageux en raison de la simplicité de son industrialisation et du faible coût de cette dernière.

D'autres caractéristiques et avantages de l'invention apparaîtront à la lecture d'un exemple de réalisation d'une roue conforme à l'invention, en référence aux dessins dans lesquels :
- la figure 1 est une coupe axiale de la roue conforme à l'invention,
- la figure 2 est un grossissement du détail A de la figure 1,
- la figure 3 est un grossissement du détail A selon une variante de réalisation de la roue représentée à la figure 1.

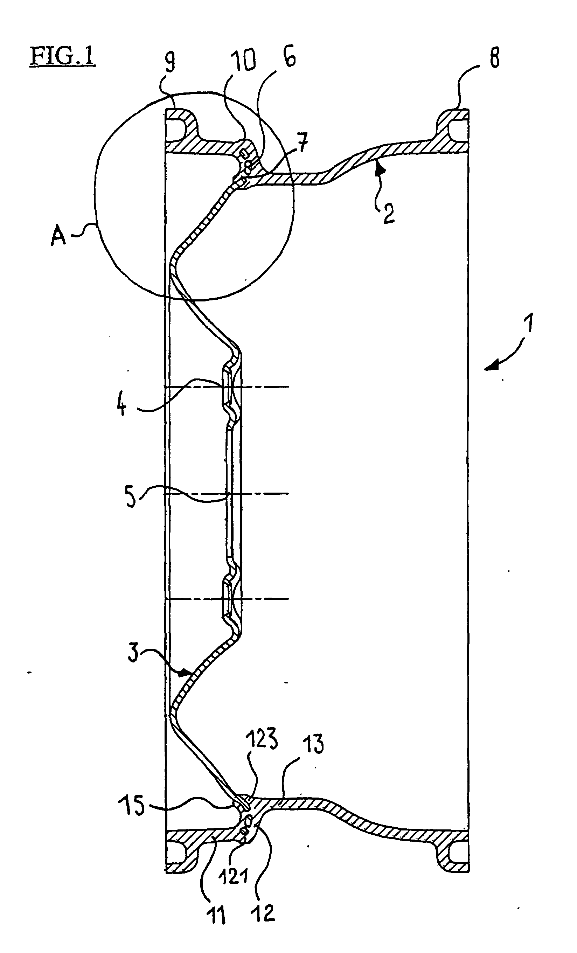

Selon la figure 1, la roue 1 comporte une jante 2 en matériau composite et un disque 3 métallique assemblés l'un avec l'autre.

Le disque 3 porte des trous 4, dans sa partie centrale, destinés à la fixation de la roue sur un moyeu non représenté ainsi qu'une ouverture 5 de centrage de la roue 1 par rapport audit moyeu. Le disque 3 porte également un bord périphérique 6 d'assemblage avec la jante 2. Ce bord d'assemblage 6 est percé de trous 7 de renforcement de l'assemblage répartis régulièrement sur sa circonférence.

La jante 2 de forme cylindrique creuse, présente à ses extrémités périphériques des rebords d'accrochage 8 et 9 des talons d'une enveloppe de pneumatique, non représentés.

La jante 2 comporte également de façon classique un siège 11 de réception de l'un des talons, situé entre le rebord 9 et un bossage 10 de maintien en position dudit talon, couramment désignée par le mot anglais "hump", et une gorge 13 reliée au siège 11 par un tronçon annulaire de jante 12. Le tronçon 12 possède deux extrémités 121 et 123 respectivement de liaison avec le siège 11 et la gorge 13, l'extrémité 121 portant le bossage 10.

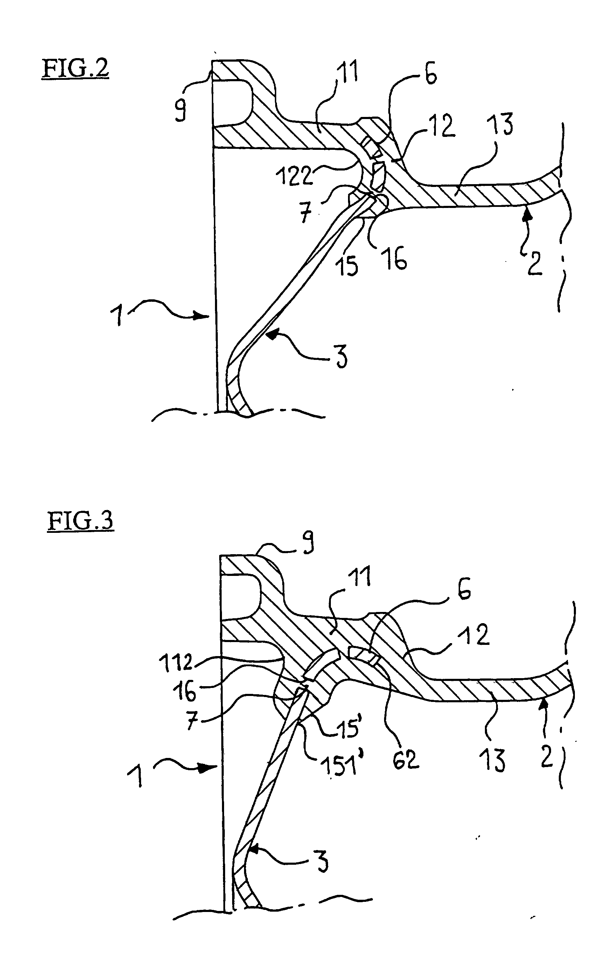

Comme le montre la figure 2, la jante 2 est surmoulée sur le bord d'assemblage 6 de sorte que ce dernier est inséré dans le tronçon 12 et s'étend dans une direction sensiblement parallèle aux génératrices dudit tronçon, le disque 3 sortant de la paroi radialement intérieure 123 du tronçon 12 à proximité de la zone de jonction dudit tronçon 12 et de la paroi de gorge 13. Afin de ne pas créer de points de fragilité dans le tronçon 12, le bord d'assemblage 6 s'étend radialement à l'intérieur dudit tronçon 12 sur toute la longueur de ce dernier.

Les trous 7 de renforcement du bord d'assemblage 6 sont ainsi remplis par le matériau composite constituant la jante 2 et qui forment donc des plots de liaison 16. La présence de ces plots 16 permet de renforcer la liaison entre la jante 2 et le disque 3 en réalisant, en plus du surmoulage sur le bord d'assemblage 6, un surmoulage passant au travers dudit bord.

De plus, le bord d'assemblage 6 est recourbé vers l'extérieur du disque 3 par rapport à la roue montée c'est-à-dire vers le rebord d'accrochage 9, de même que la surface 122 du tronçon 12 intérieure à la jante 2. Cette disposition courbe permet d'assurer une meilleure répartition sur la roue des efforts de contrainte s'exerçant axialement sur celle-ci lors du roulage. L'obtention d'une telle répartition est particulièrement importante puisqu'actuellement, pour des raisons d'encombrement généralement dû aux disques de frein, l'épaisseur de la jante est limitée.

La réalisation d'une liaison de la jante 2 et du disque 3 sur toute la circonférence de la jante 2, permet également d'avoir une répartition des masses sensiblement uniforme sur celle-ci. Afin de prolonger cette zone de liaison, l'extrémité 123 du tronçon 12 porte une saillie 15 dirigée vers l'intérieur de la jante 2 qui prolonge la zone de recouvrement entre la jante 2 et le disque 3, et qui suit la courbure du tronçon 12. Le bord d'assemblage 6 est également inséré dans cette partie en saillie 15 en suivant la courbure de celle-ci.

Par ailleurs, la déformation due à la pression de gonflage des pneumatiques qui fait particulièrement travailler le tronçon 12, est plus importante lorsque la jante est réalisée dans un matériau composite, particulièrement dans le cas de matériaux thermoplastiques, que dans un métal. Pour éviter un affaissement trop important entre la gorge 13 et le rebord 8, il est donc nécessaire d'avoir une rigidité du rebord 8 plus importante. Le phénomène existe également au niveau du rebord 9 bien que moins amplifié du fait de la longueur de jante plus courte entre ledit rebord et le tronçon 12.

Néanmoins une trop grande rigidité des rebords 8 et 9 risquerait d'entraîner, lors de l'application de la contrainte sur la jante 2 due à la pression de gonflage des pneumatiques, une déformation de la jante 2 correspondant à un affaissement de la partie centrale de la jante 2 vers le centre de la roue 1, ce qui n'est pas non plus souhaitable.

Afin donc de réaliser une jante 2 qui soit un support suffisamment rigide pour l'enveloppe de pneumatique, les rebords 8 et 9 possèdent une section axiale en U. Cette forme particulière permettant tout en augmentant la masse au niveau des rebords et donc la rigidité, de préserver une certaine flexibilité desdits rebords.

Ainsi l'effet de la pression de gonflage du pneumatique ne pourra provoquer qu'une faible déformation sur la jante 2 qui préservera néanmoins le profil de ladite jante.

Ainsi la roue 1 possède à la fois les caractéristiques mécaniques et thermiques nécessaires, sans présenter de zone de grande fragilité. Cette roue réalise une liaison entre la jante et le disque solide et fiable.

Dans la suite de la description, on désignera les éléments communs aux différentes figures par les mêmes références.

Une variante de réalisation de la roue 1 est représentée à la figure 3. Cette variante se distingue de la précédente par le positionnement du bord d'assemblage 6 dans la jante 2.

En effet le bord d'assemblage 6 est inséré dans le siège 11 par la paroi radialement intérieure 112 de celui-ci et comporte une extrémité 62 positionnée au niveau de la zone de jonction dudit siège 11 et du tronçon 12. De plus, le siège 11 porte une saillie 15' dirigée vers l'intérieur de la jante 2 et dans laquelle s'étend le bord d'assemblage 6, le disque 3 sortant de la jante 2 par une extrémité libre 151' de ladite saillie 15'.

Le bord d'assemblage 6 est dans ce cas recourbé vers l'intérieur du disque 3, soit vers le rebord d'accrochage 8. Le changement de sens de la courbure par rapport à la réalisation représentée dans les figures 1 et 2, s'explique par la nécessité de rétablir un certain équilibre concernant la rigidité de la partie centrale de la jante 2.

Cette variante de réalisation qui répond aux critères de fiabilité vus précédemment, peut permettre de réaliser une roue suivant des contraintes géométriques différentes.

On décrira brièvement le procédé de fabrication d'une roue conforme à l'invention. Il consiste dans une première étape à fabriquer le disque métallique 3. Cette fabrication peut se faire classiquement par emboutissage ou tout autre technique connue.

Le disque 3 peut être constitué par un métal tel qu'un acier, de l'aluminium, du magnésium ou un alliage d'aluminium ou de magnésium. L'épaisseur du disque 3 ainsi que les autres caractéristiques du matériau sont choisies en fonction des caractéristiques du véhicule sur lequel la roue doit être montée.

Le disque 3 obtenu est alors positionné dans un moule qui entoure son bord d'assemblage 6 assurant l'étanchéité entre la partie du disque 3 à surmouler et le reste du disque 3.

Dans une troisième étape, le matériau composite est injecté dans le moule de préférence par plusieurs points afin d'avoir une homogénéité de répartition du matériau dans la jante 2. Le matériau composite se répartit ainsi dans toute la jante 2 y compris dans les trous 7 du bord d'assemblage 6 du disque 3.

Différents matériaux composites peuvent convenir tels que, à titre d'exemple, une résine chargée en fibres longues ou un thermoplastique chargé en fibres courtes. Cependant les matériaux thermoplastiques chargés ou non, conviennent particulièrement car le temps de cycle nécessaire à l'opération de surmoulage est beaucoup plus court que dans le cas d'un matériau thermodurcissable.

De nombreux matériaux thermoplastiques peuvent être utilisés pour réaliser cette jante, on citera à titre d'exemple le polyamide 6.6 renforcé par des fibres de verre.

Ce procédé de fabrication peu coûteux, permet de réaliser des roues dans un temps de cycle très court, il est par conséquent très intéressant au niveau industriel.

De plus, ce procédé permet pour des jantes de même dimensions, de réaliser des roues avec une grande variété de combinaisons offertes en changeant le dessin du disque mais en conservant la même géométrie pour le bord d'assemblage.

## Revendications

1. Roue pour véhicules automobiles, qui comprend une jante (2) constituée par un matériau composite et un disque (3) essentiellement métallique assemblés uniquement par un bord d'assemblage (6), **caractérisée par le fait que** le bord d'assemblage est constitué par l'extrémité périphérique libre du disque (3) et que ce bord d'assemblage (6) est inséré dans la jante (2) de sorte que les deux faces dudit bord sont recouvertes par la jante.

2. Roue selon la revendication 1, **caractérisée par le fait que** la jante (2) est constituée par un matériau thermoplastique.

3. Roue selon l'une quelconque des revendications 1 ou 2, **caractérisée par le fait que** la jante (2) est surmoulée sur le bord d'assemblage (6).

4. Roue selon l'une quelconque des revendications 1 à 3, **caractérisée par le fait que** la jante (2) comportant un siège (11) et une gorge (13) reliés par un tronçon annulaire (12) de la jante (2), le bord d'assemblage (6) est inséré dans ledit tronçon (12).

5. Roue selon la revendication 4, **caractérisée par le fait que** le bord d'assemblage (6) est inséré dans le tronçon annulaire (12) dans une direction sensiblement parallèle aux génératrices de ce dernier, le disque (3) sortant de la paroi radialement intérieure (123) du tronçon annulaire (12) à proximité de la zone de jonction de ce dernier et de la gorge (13).

6. Roue selon l'une quelconque des revendications 4 ou 5, **caractérisée par le fait que** le bord d'assemblage (6) s'étend radialement à l'intérieur du tronçon annulaire (12) sur toute la longueur de ce dernier.

7. Roue selon l'une quelconque des revendications 5 ou 6, **caractérisée par le fait que** l'extrémité (123) du tronçon annulaire (12) reliée à la gorge (13) porte une saillie (15) dirigée vers l'intérieur de la jante (2), qui prolonge la zone de recouvrement entre la jante (2) et le disque (3).

8. Roue selon l'une quelconque des revendications 5 à 7, **caractérisée par le fait que** le bord d'assemblage (6) est recourbé vers l'extérieur du disque (3).

9. Roue selon l'une quelconque des revendications 1 ou 2, **caractérisée par le fait que** la jante (2) comportant un siège (11) et une gorge (13) reliés par un tronçon annulaire (12) de la jante (2), le bord d'assemblage (6) est inséré dans le siège (11) par la paroi radialement intérieure (112) de celui-ci et comporte une extrémité (62) positionnée au niveau de la zone de jonction dudit siège (11) et du tronçon annulaire (12).

10. Roue selon la revendication 9, **caractérisée par le fait que** le siège (11) porte une saillie (15') dirigée vers l'intérieur de la jante (2) et dans laquelle s'étend le bord d'assemblage (6), le disque (3) sortant de la jante (2) par une extrémité libre (151') de ladite saillie (15').

11. Roue selon l'une quelconque des revendications 8 ou 9, **caractérisée par le fait que** le bord d'assemblage (6) est recourbé vers l'intérieur du disque (3).

12. Roue selon l'une quelconque des revendications 1 à 11, **caractérisée par le fait que** le bord d'assemblage (6) est percé de trous (7) de renforcement de l'assemblage répartis régulièrement sur sa circonférence et à l'intérieur desquels sont insérés des plots (16) de liaison portés par la jante (2).

13. Roue selon l'une quelconque des revendications 1 à 12, **caractérisée par le fait que** la jante (2) porte des rebords d'accrochage (8, 9) de section axiale en U.

14. Procédé de fabrication d'une roue selon l'une quelconque des revendications 1 à 13, qui consiste à fabriquer dans une première étape le disque métallique (3), puis à positionner un bord périphérique d'assemblage du disque (3) dans un moule, et dans une troisième étape à surmouler la jante (2) sur ledit bord d'assemblage (6).

## Patentansprüche

1. Rad für Kraftfahrzeuge, das eine Felge (2) aufweist, die im wesentlichen aus einem Verbundmaterial gebildet ist, sowie eine Scheibe (3) im wesentlichen aus Metall, die einstückig durch einen Montagerand (6) zusammengefügt sind, **dadurch gekennzeichnet, daß** der Montagerand vom freien Umfangsende der Scheibe (3) gebildet ist, und daß der Montagerand (6) derart in die Felge (2) eingeführt ist, daß die beiden Außenflächen des genannten Randes durch die Felge abgedeckt sind.

2. Rad nach Anspruch 1, **dadurch gekennzeichnet, daß** die Felge (2) aus einem thermoplastischen Material gebildet ist.

3. Rad nach irgendeinem der Ansprüche 1 oder 2, **dadurch gekennzeichnet, daß** die Felge (2) auf den Montagerand (6) aufgeformt ist.

4. Rad nach irgendeinem der Ansprüche 1 bis 3, **dadurch gekennzeichnet, daß** die Felge (2) einen Sitz (11) und eine Auskehlung (13) aufweist, die durch ein ringförmiges Stück (12) der Felge (2) verbunden sind, und daß der Montagerand (6) in das genannte Stück (12) eingeführt ist.

5. Rad nach Anspruch 4, **dadurch gekennzeichnet, daß** der Montagerand (6) in das ringförmige Stück (12) in einer im wesentlichen zu dessen Erzeugenden parallelen Richtung eingeführt ist, und daß die Scheibe (3) aus dem radial inneren Rand (123) des ringförmigen Stücks (12) in Nähe des Bereiches der Verbindung dessen mit der Auskehlung (13) austritt.

6. Rad nach irgendeinem der Ansprüche 4 oder 5, **dadurch gekennzeichnet, daß** sich der Montagerand (6) radial im Inneren des ringförmigen Stücks (12) über dessen gesamte Länge erstreckt.

7. Rad nach irgendeinem der Ansprüche 5 oder 6, **dadurch gekennzeichnet, daß** das Ende (123) des ringförmigen Stücks (12), das mit der Auskehlung (13) verbunden ist, einen Vorsprung (15) trägt, der dem Inneren der Felge (2) zugewandt ist, der die Überdeckungszone zwischen der Felge (2) und der Scheibe (3) verlängert.

8. Rad nach irgendeinem der Ansprüche 5 bis 7, **dadurch gekennzeichnet, daß** der Montagerand (6) zur Außenseite der Scheibe (3) hin gekrümmt ist.

9. Rad nach irgendeinem der Ansprüche 1 oder 2, **dadurch gekennzeichnet, daß** die Felge (2) einen Sitz (11) und eine Auskehlung (13) aufweist, die durch ein ringförmiges Stück (12) der Felge (2) miteinander verbunden sind, und daß der Montagerand (6) in den Sitz (11) durch dessen radial innere Wand (112) eingeführt ist und ein Ende (62) aufweist, das auf Höhe des Bereiches der Verbindung des genannten Sitzes (11) mit dem ringförmigen Stück (12) angeordnet ist.

10. Rad nach Anspruch 9, **dadurch gekennzeichnet, daß** der Sitz (11) einen Vorsprung (15') trägt, der dem Innern der Felge (2) zugewandt ist und in dem sich der Montagerand (6) erstreckt, und daß die Scheibe (3) aus der Felge (2) durch ein freies Ende (151') des genannten Vorsprungs (15') austritt.

11. Rad nach irgendeinem der Ansprüche 8 oder 9, **dadurch gekennzeichnet, daß** der Montagerand (6) zur Innenseite der Scheibe (3) hin gekrümmt ist.

12. Rad nach irgendeinem der Ansprüche 1 bis 11, **dadurch gekennzeichnet, daß** der Montagerand (6) von Löchern (7) zur Montageverstärkung durchsetzt ist, die regelmäßig über einen Umfang verteilt sind, und daß in das Innere derselben Verbindungsstopfen (16) eingeführt sind, die von der Felge (2) getragen sind.

13. Rad nach irgendeinem der Ansprüche 1 bis 12, **dadurch gekennzeichnet, daß** die Felge (2) wulstartige Ränder (8, 9) mit U-förmigem, axialem Querschnitt aufweist.

14. Verfahren zur Herstellung eines Rades nach irgendeinem der Ansprüche 1 bis 13, das darin besteht, in einem ersten Schritt die Metallscheibe (3) herzustellen, dann einen Umfangs-Montagerand der Scheibe (3) in eine Form einzulegen, und in einem dritten Schritt die Felge (2) auf den genannten Montagerand (6) aufzuformen.

## Claims

1. A wheel for motor vehicles, which comprises a rim (2) of composite material and an essentially metallic disc (3) assembled together solely by an assembly edge (6), **characterised by** the fact that the assembly edge is formed by the free peripheral end of the disc (3) and that this assembly edge (6) is inserted into the rim (2) such that the two faces of said edge are covered by the rim.

2. A wheel according to Claim 1, **characterised by** the fact that the rim (2) is formed of a thermoplastic material.

3. A wheel according to any one of Claims 1 or 2, **characterised by** the fact that the rim (2) is moulded over the assembly edge (6).

4. A wheel according to any one of Claims 1 to 3, **characterised by** the fact that the rim (2) comprising a seat (11) and a groove (13) which are connected by an annular section (12) of the rim (2), the assembly edge (6) is inserted into said section (12).

5. A wheel according to Claim 4, **characterised by** the fact that the assembly edge (6) is inserted into the annular section (12) in a direction substantially parallel to the generatrices of the latter, the disc (3) emerging from the radially inner wall (123) of the annular section (12) close to the junction zone of the latter and of the groove (13).

6. A wheel according to any one of Claims 4 or 5, **characterised by** the fact that the assembly edge (6) extends radially to the inside of the annular section (12) over the entire length thereof.

7. A wheel according to any one of Claims 5 or 6, **characterised by** the fact that the end (123) of the annular section (12) which is connected to the groove (13) bears a protrusion (15) directed towards the inside of the rim (2) which extends the zone of overlap between the rim (2) and the disc (3).

8. A wheel according to any one of Claims 5 to 7, **characterised by** the fact that the assembly edge (6) is curved towards the outside of the disc (3).

9. A wheel according to any one of Claims 1 or 2, **characterised by** the fact that the rim (2) comprising a seat (11) and a groove (13) which are connected by an annular section (12) of the rim (2), the assembly edge (6) is inserted into the seat (11) by the radially inner wall (112) thereof and comprises an end (62) positioned at the level of the junction zone of said seat (11) and the annular section (12).

10. A wheel according to Claim 9, **characterised by** the fact that the seat (11) bears a protrusion (15') directed towards the inside of the rim (2) and in which the assembly edge (6) extends, the disc (3) emerging from the rim (2) via a free end (151') of said protrusion (15').

11. A wheel according to any one of Claims 8 or 9, **characterised by** the fact that the assembly edge (6) is curved towards the inside of the disc (3).

12. A wheel according to any one of Claims 1 to 11, **characterised by** the fact that the assembly edge (6) is provided with holes (7) for reinforcing the assembly, which are distributed regularly over its circumference and within which are inserted connecting blocks (16) borne by the rim (2).

13. A wheel according to any one of Claims 1 to 12, **characterised by** the fact that the rim (2) has retaining flanges (8, 9) of U-shaped axial section.

14. A process for manufacturing a wheel according to any one of Claims 1 to 13, which consists of manufacturing, in a first stage, the metallic disc (3), then positioning a peripheral assembly edge of the disc (3) in a mould and, in a third stage, moulding the rim (2) over said assembly edge (6).
